(19) Europäisches Patentamt
European Patent Office
Office européen des brevets

(11) **EP 3 421 981 B1**

(12) **EUROPÄISCHE PATENTSCHRIFT**

(45) Veröffentlichungstag und Bekanntmachung des Hinweises auf die Patenterteilung:
**14.04.2021 Patentblatt 2021/15**

(51) Int Cl.:
***G01N 27/22*** *(2006.01)*     ***G01K 7/18*** *(2006.01)*

(21) Anmeldenummer: **18179701.0**

(22) Anmeldetag: **26.06.2018**

(54) **SENSORVORRICHTUNG ZUR MESSUNG VON FEUCHTE UND TEMPERATUR**

SENSOR DEVICE FOR MEASURING HUMIDITY AND TEMPERATURE

DISPOSITIF DE DÉTECTION POUR LA MESURE DE L'HUMIDITÉ ET DE LA TEMPÉRATURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.06.2017 DE 102017210874**

(43) Veröffentlichungstag der Anmeldung:
**02.01.2019 Patentblatt 2019/01**

(73) Patentinhaber: **E+E ELEKTRONIK GES.M.B.H.**
**4209 Engerwitzdorf (AT)**

(72) Erfinder: **HAIDER, Albin**
**4211 Alberndorf (AT)**

(74) Vertreter: **Hofmann, Ernst**
**Dr. Johannes Heidenhain GmbH,**
**Patentabteilung,**
**Postfach 12 60**
**83292 Traunreut (DE)**

(56) Entgegenhaltungen:
**EP-A1- 2 718 706**     **US-A- 4 319 485**
**US-A1- 2013 139 587**     **US-A1- 2016 161 435**

**Beschreibung**

GEBIET DER TECHNIK

Die vorliegende Erfindung betrifft eine Sensorvorrichtung und eine Schaltungsanordnung zur Messung von Feuchte und Temperatur.

STAND DER TECHNIK

Zur Messung von Feuchte und Temperatur eines Mediums sind Sensorvorrichtungen bekannt, die aus einem Trägersubstrat bestehen, auf dem in Dünn- oder Dickfilmtechnik aufgebrachte Sensorik-Komponenten angeordnet sind. Die beispielsweise in der US 4,277,742 offenbarte Sensorvorrichtung weist ein Trägersubstrat aus einem elektrisch leitfähigen Halbleitermaterial auf, auf dem ein kapazitiver Feuchtesensor angeordnet ist. Der kapazitive Feuchtesensor besteht aus einer Grundelektrode, einer feuchtedurchlässigen Deckelektrode sowie einem zwischen den Elektroden angeordneten feuchteempfindlichen Dielektrikum. Separat vom Feuchtesensor ist in der US 4,277,742 im Ausführungsbeispiel der Figur 7 desweiteren noch ein Temperatursensor in Form einer planaren Leiterbahn auf dem Halbleiter-Trägersubstrat vorgesehen. Nachteilig an der vorgeschlagenen Sensorvorrichtung ist neben dem großen Platzbedarf für den Feuchte- und Temperatursensor insbesondere, dass ein relativ komplexer Schichtaufbau mit entsprechend vielen Prozessschritten bei der Herstellung vorgesehen ist. Desweiteren ist zur elektrischen Kontaktierung der Sensorvorrichtung ein Bondverfahren erforderlich, was ebenfalls einen gewissen fertigungstechnischen Aufwand erfordert.

Aus der US 2016/0161435 A1 ist ein kombinierter Temperatur- und Feuchtesensor bekannt, bei dem die Deckelektrode des kapazitiven Feuchtesensors auch zur Temperaturmessung verwendet wird.

Die US 2013/0139587 A1 offenbart z.B. in Figur 9 eine Sensoranordnung mit einem kapazitiven Feuchtesensor und einer benachbart hierzu angeordneten Referenz-Kapazität. Der Feuchtesensor und die Referenzkapazität nutzen eine gemeinsame Grundelektrode.

ZUSAMMENFASSUNG DER ERFINDUNG

Der vorliegenden Erfindung liegt die Aufgabe zugrunde, eine Sensorvorrichtung und eine Schaltungsanordnung zur Messung von Feuchte und Temperatur zu schaffen, die bei möglichst geringen Herstellkosten eine noch hinreichende Messgenauigkeit liefert.

Diese Aufgabe wird erfindungsgemäß durch eine Sensorvorrichtung und Schaltungsanordnung mit den Merkmalen des Anspruchs 1 gelöst.

Vorteilhafte Ausführungen der erfindungsgemäßen Sensorvorrichtung und Schaltungsanordnung ergeben sich aus den Maßnahmen, die in den abhängigen Ansprüchen aufgeführt sind.

Die erfindungsgemäße Sensorvorrichtung und Schaltungsanordnung zur Messung von Feuchte und Temperatur umfasst einerseits eine Sensorvorrichtung, die aus einem elektrisch leitfähigen Halbleiter-Trägersubstrat, auf dem ein kapazitiver Feuchtesensor angeordnet ist, besteht, und eine Grundelektrode, eine feuchtedurchlässige Deckelektrode sowie ein zwischen Grund- und Deckelektrode angeordnetes, feuchteempfindliches Dielektrikum umfasst. Die Grundelektrode besteht aus einem Material mit einer definierten temperaturabhängigen Widerstandscharakteristik und ist auf einer Passivierungsschicht aufgebracht, die auf dem Halbleiter-Trägersubstrat angeordnet ist. Die Schaltungsanordnung andererseits fungiert sowohl als Temperaturmessungs-Schaltungsanordnung wie auch als Feuchtemessungs-Schaltungsanordnung. Die Grundelektrode ist dabei desweiteren auch Bestandteil der Temperaturmessungs-Schaltungsanordnung. Ferner ist die Grundelektrode Bestandteil einer Referenzkapazität der Feuchtemessungs-Schaltungsanordnung, die zur Auswertung des Feuchtesensors dient, wobei die Referenzkapazität die Grundelektrode, das Halbleiter-Trägersubstrat sowie die Passivierungsschicht umfasst.

Hierbei kann die Passivierungsschicht aus Siliziumdioxid und/oder Siliziumoxynitrid ausgebildet sein.

Es ist desweiteren möglich, dass die Grundelektrode als mäanderförmig verlaufende, bifilare, metallische Leiterbahn ausgebildet ist.

Es kann vorgesehen sein, dass auf dem Halbleiter-Substrat ein Kontaktierungsanschluss für die Deckelektrode, zwei Kontaktierungsanschlüsse für die Grundelektrode sowie ein Kontaktierungsanschluss für das Halbleiter-Trägersubstrat angeordnet sind.

Hierbei können die Kontaktierungsanschlüsse jeweils planar ausgebildet sein.

Hierbei können die weiteren Komponenten der Temperaturmessungs-Schaltungsanordnung räumlich entfernt vom Halbleiter-Trägersubstrat angeordnet sein.

Vorzugsweise ist das Halbleiter-Trägersubstrat aus dotiertem Silizium ausgebildet.

Die Sensorvorrichtung kann aufgrund des einfachen Aufbaus in nur wenigen Prozessschritten hergestellt werden, d.h. es resultieren besonders geringe Herstellkosten. Hierzu trägt ferner bei, dass die Sensorvorrichtung als passives System ohne integrierte Signalverarbeitungskomponenten ausgebildet ist und daher ein preisgünstiges Halbleiter-Trägersubstrat verwendet werden kann.

Weiterhin erweist sich als vorteilhaft, dass zur Temperatur- und Feuchtemessung eine einzige Schaltungsanordnung dient, die sowohl zur Auswertung des Temperatursensors als auch zur Auswertung des Feuchtesensors genutzt werden kann.

Ferner kann die Sensorvorrichtung ohne erforderliches Packaging oder Gehäuse weiterverarbeitet werden.

Weitere Einzelheiten und Vorteile der vorliegenden Erfindung seien anhand der nachfolgenden Beschreibung von Ausführungsbeispielen der erfindungsgemäßen Sensorvorrichtung und Schaltungsanordnung in Verbindung mit den Figuren erläutert.

## KURZE BESCHREIBUNG DER ZEICHNUNGEN

Es zeigt

Figur 1a     eine Schnittansicht zur Erläuterung des prinzipiellen Lagenaufbaus in der Sensorvorrichtung;

Figur 1b     das zum Lagenaufbau in Figur 1a gehörige, stark vereinfachte elektrische Ersatzschaltbild;

Figur 2a     eine Draufsicht auf die Grundelektrodenebene eines Ausführungsbeispiels der Sensorvorrichtung;

Figur 2b     verschiedene Schnittansichten der Sensorvorrichtung aus Figur 2a;

Figur 3     ein Schaltbild zur Erläuterung einer geeigneten Schaltungsanordnung zur Auswertung des Temperatursensor und des Feuchtesensors.

## BESCHREIBUNG DER AUSFÜHRUNGSFORMEN

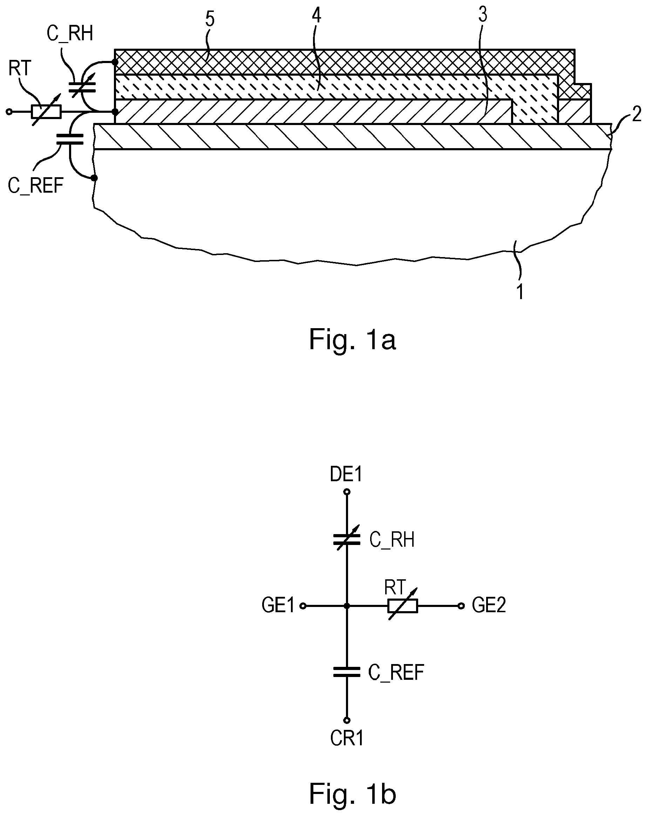

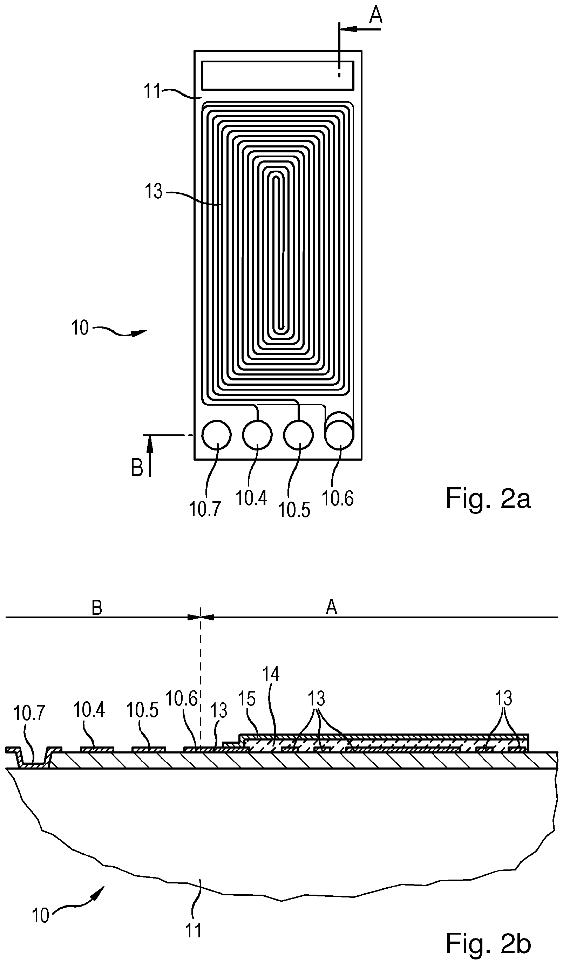

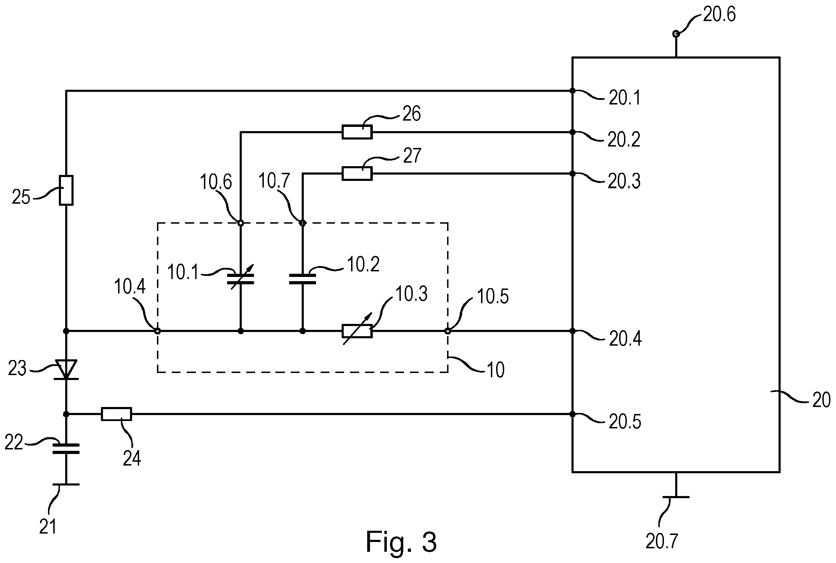

Bevor anhand der Figuren 2a, 2b und 3 ein konkretes Ausführungsbeispiel der erfindungsgemäßen Sensorvorrichtung und Schaltungsanordnung erläutert wird, sei zuvor anhand der Figuren 1a und 1b der grundlegende Aufbau der vorliegenden Erfindung beschrieben.

Die Sensorvorrichtung umfasst ein elektrisch leitfähiges Halbleiter-Trägersubstrat 1, auf dem bestimmte Sensorik-Komponenten zur Messung von Feuchte und Temperatur eines umgebenden Mediums in der nachfolgend beschriebenen Art und Weise angeordnet sind. Als leitfähiges Halbleiter-Trägersubstrat 1 ist vorzugsweise dotiertes Silizium vorgesehen. Hierzu kann ein entsprechender Silizium-Wafer vorgesehen werden, aus dem sich dann eine Vielzahl Sensorvorrichtungen kostengünstig im Mehrfachnutzen fertigen lassen. Als geeigneter Silizium-Wafer kann hierbei z.B. ein kostengünstiger 8"-Wafer genutzt werden, der nicht über weitere Halbleiter-Fertigungsprozesse vorbearbeitet ist, um darüber weitere aktive Elektronik-Komponenten darin zu integrieren. Insbesondere ist hierbei keine vorhergehende strukturierte Dotierung des Silizium-Wafers erforderlich. Beispielsweise könnte ein Wafer verwendet werden, der von der Fa. UniversityWafer, Inc. unter der Bezeichnung "Prime Si + wet SiO2 wafer 8 inch" (Orientation (100); 1-side polished; P-type doped (Boron), 0,05...0,02 OHM cm; 3000nm SiO2 (+/- 5%)) vertrieben wird. Da die Sensorvorrichtung als komplett passives System ausgebildet ist, kann auf eine derartige Vorbearbeitung des Halbleiter-Trägersubstrats 1 verzichtet werden und stattdessen ein besonders preisgünstiges Halbleiter-Trägersubstrat 1 aus dotiertem Silizium zum Einsatz kommen.

Wie aus Figur 1a ersichtlich, ist auf dem Halbleiter-Trägersubstrat 1 eine elektrisch isolierende Passivierungsschicht 2 angeordnet, beispielsweise bestehend aus Siliziumdioxid $SiO_2$ und/oder Siliziumoxynitrid SiON. Auf der Passivierungsschicht 2 sind dann die weiteren Lagen bzw. Schichten angeordnet, welche die erforderlichen Sensorik-Komponenten zur Feuchte- und Temperaturmessung ausbilden.

Als Sensorik-Komponente zur Feuchtemessung ist hierbei ein kapazitiver Feuchtesensor vorgesehen, der eine Grundelektrode 3, eine feuchtedurchlässige Deckelelektrode 5 sowie ein zwischen Grund- und Deckelektrode 3, 5 angeordnetes, feuchteempfindliches Dielektrikum 4 umfasst. Wie aus Figur 1a ersichtlich, ist die Grundelektrode 3, die aus einem elektrisch leitfähigen Material wie z.B. Platin besteht, auf der Passivierungsschicht 2 aufgebracht. Alternativ hierzu könnten auch andere Materialien wie z.B. Aluminium, Gold, Nickel, Titan oder Palladium zum Einsatz kommen, also Materialien, die jeweils einen Temperaturkoeffizienten TC > = 3000ppm/°C aufweisen und die derart strukturiert werden können, dass diese einen ausreichend hohen Widerstand besitzen. Im Hinblick auf eine geeignete Geometrie sowie Verfahren zum Aufbringen der Grundelektrode 3 sei auf die nachfolgende Beschreibung eines konkreten Ausführungsbeispiels der erfindungsgemäßen Sensorvorrichtung und Schaltungsanordnung anhand der Figuren 2a, 2b und 3 verwiesen. Als oberhalb der Grundelektrode 3 angeordnetes Dielektrikum 4 kann etwa ein Polymer wie z.B. Polyimid verwendet werden, dessen Kapazität sich in definierter Art und Weise feuchteabhängig ändert. Die feuchtedurchlässige Deckelektrode 5 ist im vorliegenden Ausführungsbeispiel flächig ausgebildet und besteht ebenfalls aus einem elektrisch leitfähigen Material wie etwa Chrom. Die Feuchtedurchlässigkeit der Deckelektrode 5 kann durch eine geeignete poröse oder rissige Struktur derselbigen gewährleistet werden; über diese Struktur gelangt das umgebende Medium, dessen Feuchtegehalt zu messen ist, in Kontakt mit dem feuchteempfindlichen Dielektrikum 4. Alternativ zu einer flächigen, rissigen Deckelektrode kann auch vorgesehen werden, die Deckelektrode strukturiert in Form von mäanderförmigen Bahnen auszubilden und Löcher in den Bahnen auszubilden.

Erfindungsgemäß ist nunmehr vorgesehen, die Grundelektrode 3 nicht nur als Teil des kapazitiven Feuchtesensors zu nutzen, sondern mindestens auch zur Temperaturmessung, wozu die Grundelektrode 3 auch Bestandteil einer geeigneten Temperaturmessungs-Schaltungsanordnung bzw. Messschaltung ist. Um dies zu gewährleisten, ist ein Material für die Grundelektrode 3 vorzusehen, das eine definierte temperaturabhängige Widerstandscharakteristik aufweist und damit als Temperatursensor fungieren kann; geeignet hierzu ist wie bereits oben erwähnt Platin. In Figur 1a bzw. im zugehörigen, stark vereinfachten elektrischen Ersatzschaltbild der Figur 1b ist der über die Grundelektrode 3 ausgebildete, temperaturabhängige Messwiderstand zur Temperaturmessung mit RT bezeichnet; die zugehörigen Kontaktierungsanschlüsse, über die dieser bzw. die Grundelektrode 3 mit der - nicht in diesen Figuren gezeigten - Temperaturmessungs-Schaltungsanordnung verbunden wird, sind mit GE1, GE2 bezeichnet. Ebenfalls in den Figuren 1a, 1b gezeigt ist die feuchteabhängige Messkapazität C_RH des feuchtempfindlichen Dielektrikums 4 sowie der zugehörige Kontaktierungsanschluss DE1 der Deckelektrode 5.

Besonders vorteilhaft erweist sich, wenn die Grundelektrode 3 nicht nur Bestandteil des kapazitiven Feuchtesensors und einer Temperaturmessungs-Schaltungsanordnung ist, sondern darüber hinaus noch Bestandteil einer Referenzkapazität C_REF, die zur Auswertung des kapazitiven Feuchtesensors genutzt wird. Die entsprechende Referenzkapazität C_REF umfasst hierbei neben der Grundelektrode 3 die als Dielektrikum der Referenzkapazität C_REF fungierende Passivierungsschicht 2 sowie als weitere Elektrode das Halbleiter-Trägersubstrat 1. Mit CR1 wird in Figur 1b dabei der Kontaktierungsanschluss für die Referenzkapazität C_REF bezeichnet. Im Hinblick auf die Auswertung des kapazitiven Feuchtesensors und die Nutzung der Referenzkapazität C_REF in einer geeigneten Feuchtemessungs-Schaltungsanordnung sei auf die nachfolgende Beschreibung eines konkreten Ausführungsbeispiels der erfindungsgemäßen Sensorvorrichtung und Schaltungsanordnung anhand der Figuren 2a, 2b und 3 verwiesen.

Im Zusammenhang mit dem vereinfachten Ersatzschaltbild in Figur 1b sei erwähnt, dass zur korrekten Darstellung der realen Verhältnisse noch weitere Effekte berücksichtigt werden müssten. So bildet etwa die zur Temperaturmessung genutzte Grundelektrode auch Kapazitäten zum Feuchtesensor bzw. zur Referenzkapazität aus etc..

Die erfindungsgemäß vorgesehene Mehrfachnutzung der Grundelektrode 3 vereinfacht die Herstellung der entsprechenden Sensorvorrichtung erheblich, da insgesamt deutlich weniger Prozessschritte zum Aufbringen funktionsrelevanter Schichten erforderlich sind als wenn im Vergleich hierzu jede Sensorik-Komponente einzeln bzw. separat auf dem Halbleiter-Trägersubstrat prozessiert werden müsste. Die Herstellungskosten der Sensorvorrichtung können damit erheblich reduziert werden.

Ein konkretes Ausführungsbeispiel der erfindungsgemäßen Sensorvorrichtung 10 und Schaltungsanordnung wird nachfolgend anhand der Figuren 2a, 2b und 3 erläutert. Figur 2a zeigt hierbei eine Draufsicht auf die Sensorvorrichtung 10 in der Grundelektrodenebene, Figur 2b Schnittansichten der Sensorvorrichtung 10 entlang der in Figur 2a mit A und B bezeichneten Richtungen. Im linken Teil der Figur 2b ist hierbei die Schnittansicht entlang der Querrichtung A gezeigt, im rechten Teil die Schnittansicht entlang der Längsrichtung B. In Figur 3 ist eine Schaltungsanordnung dargestellt, die sowohl zur Auswertung der Messkapazität des kapazitiven Feuchtesensors als auch zur Auswertung des Messwiderstands zur Temperaturmessung geeignet ist.

Auf dem wie oben erläutert ausgebildeten, rechteckförmigen Halbleiter-Trägersubstrat 11 aus dotiertem Silizium ist eine nahezu ganzflächige Passivierungsschicht 12 in Form von Siliziumdioxid aufgebracht, auf der wiederum die restlichen Lagen bzw. Schichten der Sensorvorrichtung 10 angeordnet sind. Typische Abmessungen des Halbleiter-Trägersubstrats 11 liegen dabei im Bereich 3,2mm (Länge) x 1,6mm (Breite) x 0,725mm (Dicke). Im Fall der Verwendung eines 8"-Wafers können damit bis zu 5000 Sensorvorrichtungen aus einem derartiger Wafer gefertigt werden.

Die erfindungsgemäß sowohl für die Feuchtemessung als für die Temperaturmessung in der Sensorvorrichtung 10 herangezogene Grundelektrode 13 ist im gezeigten Ausführungsbeispiel wie insbesondere aus Figur 2a ersichtlich als mäanderförmig verlaufende bifilare metallische Leiterbahn ausgebildet, wobei die Leiterbahnen einen möglichst geringen Abstand zueinander aufweisen. Über die bifilare Ausbildung der Leiterbahnen kann eine besonders niedrige Gesamtinduktivität gewährleistet werden. Als Grundelektrodenmaterial mit definierter temperaturabhängiger Widerstandscharakteristik ist beispielsweise Platin vorgesehen. Die Kontaktierungsanschlüsse der die Grundelektrode 13 ausbildenden beiden parallelen Leiterbahnen sind mit 10.4, 10.5 bezeichnet. Wie aus Figur 2b ersichtlich, sind diese beiden Kontaktierungsanschlüsse 10.4, 10.5 wie auch die weiteren Kontaktierungsanschlüsse 10.6, 10.7 für die Deckelektrode 15 sowie für die Referenzkapazität auf dem Halbleiter-Trägersubstrat 11 jeweils planar ausgebildet.

Die Grundelektrode 13 fungiert in diesem Ausführungsbeispiel desweiteren auch als Elektrode einer Referenzkapazität, die durch die Grundelektrode 13, die Passivierungsschicht 12 sowie das Halbleiter-Trägersubstrat 11 ausgebildet wird.

Oberhalb der mäanderförmig angeordneten metallischen Leiterbahnen der Grundelektrode 13 ist sich flächig erstreckend das Dielektrikum 14 des kapazitiven Feuchtesensors, beispielsweise Polyimid angeordnet, darüber wiederum die feuchtedurchlässige Deckelektrode 15 des kapazitiven Feuchtesensors.

Wie aus Figur 2b ersichtlich, ist der Kontaktierungsanschluss 10.6 der Deckelektrode 15 in Form eines elektrisch leitfähigen, planaren Kontaktierungsbereichs, z.B. aus Nickel-Chrom und Gold oder einer Chrom-Haftschicht und einer darüber liegenden Goldschicht, auf der Passivierungsschicht 12 angeordnet, ebenso wie die entsprechend ausgebildeten Kontaktierungsanschlüsse 10.4, 10.5 der Grundelektrode 13. Der Kontaktierungsanschluss 10.7 für die Referenzkapazität ist in einer Ausnehmung der Passivierungsschicht 12 bis zum Halbleiter-Trägersubstrat 11 vorgesehen, die ebenfalls elektrisch leitfähig beschichtet ist. Aufgrund der hier vorliegenden Metall-Halbleiter-Verbindung erweist sich als vorteilhaft, wenn durch eine geeignete Materialwahl für diesen Kontaktierungsanschluss 10.7 die Ausbildung einer Schottky-Diode verhindert wird; dies kann z.B. durch die Wahl von Aluminium als Material für den Kontaktierungsanschluss 10.7 gewährleistet werden.

Eine derartige Ausbildung der Sensorvorrichtung erlaubt die Weiterverarbeitung ohne zusätzliches Gehäuse oder Packaging. Es ist beispielsweise möglich, die Sensorvorrichtung über Flip-Chip-Verfahren weiterzuverarbeiten, indem diese automatisiert direkt über eine Ausnehmung auf einer Platine oder Leiterplatte gesetzt, mit Hilfe von Lotpaste kontaktiert und über die Kontaktierungsanschlüsse elektrisch kontaktiert wird. Über einen Underfiller können die Kontaktierungsanschlüsse der Sensorvorrichtung auf der Platine fixiert und vor mechanischer Beschädigung geschützt werden.

Selbstverständlich sind darüber hinaus auch noch weitere Montagevarianten in Verbindung mit der Sensorvorrichtung realisierbar, in denen die Kontaktierung über Leitkleber, Bondverbindungen etc. erfolgen könnte.

Anhand von Figur 3 wird nachfolgend eine geeignete Schaltungsanordnung erläutert, die zur Auswertung der Sensorvorrichtung 10 genutzt werden kann, wie sie etwa im Ausführungsbeispiel der Figuren 2a, 2b erläutert wurde.

Die Komponenten der entsprechenden Schaltungsanordnung sind hierbei vorzugsweise nicht integriert im Halbleiter-Trägersubstrat des bevorzugt passiv ausgebildeten Systems angeordnet, sondern sind räumlich entfernt davon angeordnet, etwa in einer geeigneten Folgeelektronik oder dgl..

Die dargestellte Schaltungsanordnung kann hierbei in Verbindung mit der Sensorvorrichtung 10 sowohl als Temperaturmessungs-Schaltungsanordnung wie auch als Feuchtemessungs-Schaltungsanordnung fungieren. Zur Auswertung des kapazitiven Feuchtesensors als auch zur Auswertung des Temperatursensors der Sensorvorrichtung 10 kann demzufolge die gleiche Hardware genutzt werden.

Mit dem Bezugszeichen 10.1 wird in Figur 3 dabei die feuchteabhängige Messkapazität der Sensorvorrichtung 10 bezeichnet, mit dem Bezugszeichen 10.2 die Referenzkapazität und mit dem Bezugszeichen 10.3 der Messwiderstand zur Temperaturmessung. Ferner umfasst die dargestellte Schaltungsanordnung noch Widerstände 26, 27, einen Referenzwiderstand 25 sowie ein kapazitives Ladungsspeicherelement 22. Die Bezugszeichen 10.4 - 10.7 bezeichnen in Figur 3 die Kontaktierungsanschlüsse der Sensorvorrichtung 10 wie anhand der Figuren 2a, 2b erläutert.

Eine entsprechende Auswertung eines kapazitiven Feuchtesensors, zu der neben der feuchteabhängigen Messkapazität 10.1 u.a. eine bekannte Referenzkapazität 10.2 herangezogen wird, ist aus der EP 1 574 847 A2 der Anmelderin bereits bekannt. Hierbei wird die zu bestimmende, feuchteabhängige Messkapazität 10.1 mit Hilfe der Referenzkapazität 10.2, dem Ladungsspeicherelement 22, mehreren Schaltelementen und einer Steuereinheit 20 in Form eines Mikroprozessors ermittelt. Als Schaltelemente fungieren hierbei mehrere, definiert auf HIGH oder LOW schaltbare Ein- und Ausgänge bzw. Ports 20.1 - 20.5 der Steuereinheit 20. Zur Bestimmung der Messkapazität 10.1 erfolgt ein mehrmaliges Auf- und Entladen der Messkapazität 10.1 und ein hierzu paralleles Aufladen des Ladungsspeicherelements 22, bis dieses auf einen bestimmten Referenzwert aufgeladen ist. Aus der Ermittlung der Zahl der hierzu erforderlichen Aufladevorgänge oder der Zeit bis zum Erreichen des Referenzwerts wird die Messkapazität 10.1 und damit ein zur Feuchte proportionaler Messwert ermittelt. In Bezug auf weitere Details zur Auswertung eines kapazitiven Feuchtesensors mit Hilfe eines derartigen Verfahrens sei ausdrücklich auf die EP 1 574 847 B1 verwiesen.

Die gleiche Schaltungsanordnung kann nunmehr auch zur Auswertung des Temperatursensors 10.3 genutzt werden, der in der Schaltungsanordnung über die Grundelektrode 13 ausgebildet ist. Hierzu ist ein sich über mehrere Messphasen erstreckendes Vorgehen vorgesehen, das nachfolgend beispielhaft erläutert sei.

So wird in einer ersten Messphase über die Steuereinheit 20 ein Entladen der verschiedenen Kapazitäten in der Schaltungsanordnung vorgenommen, nämlich ein Entladen des Ladungsspeicherelements 22 sowie der Messkapazität 10.1 und der Referenzkapazität 10.2.

In der zweiten Messphase werden die Ports 20.1 - 20.5 der Steuereinheit 20 so umgeschaltet, dass ein Laden des Ladungsspeicherelements 22 erfolgen kann.

In der dritten Messphase wird dann das Ladungsspeicherelement 22 zum einen über den Messwiderstand 10.3 und zum anderen über den Referenzwiderstand 25 so lange geladen, bis eine vorgegebene Spannung am Port 20.5 der Steuereinheit 20 erreicht ist. Die hierzu jeweils erforderliche Zeitdauer zwischen dem Beginn des Ladevorgangs bis zum Erreichen der vorgegebenen Spannung am Port 20.5 der Steuereinheit wird im Fall der Ladung über den Messwiderstand 10.3 mit $t_T$ bezeichnet, im Fall der Ladung über den Referenzwiderstand 25 mit $t_{REF}$. Die auf diese Art und Weise ermittelten Zeitdauern $t_T$ bzw. $t_{REF}$ werden dann zur Bestimmung des temperaturabhängigen Widerstandswerts RT des Messwiderstands 10.3 herangezogen. Dieser ergibt sich hierbei aus folgender Beziehung:

$$RT = R_{REF} \cdot (t_T / t_{REF})$$

mit:

RT := temperaturabhängiger Widerstandswert des Messwiderstands

$R_{REF}$ := Widerstand des Referenzwiderstands

$t_T$ := Zeitdauer zwischen dem Beginn des Ladevorgangs bis zum Erreichen der vorgegebenen Spannung im Fall der Ladung über den Messwiderstand

$t_{REF}$ := Zeitdauer zwischen dem Beginn des Ladevorgangs bis zum Erreichen der vorgegebenen Spannung im Fall der Ladung über den Referenzwiderstand

Über geeignete Betriebsarten kann somit die hardwaremäßig identische Schaltungsanordnung sowohl zur Auswertung des kapazitiven Feuchtesensors als auch zur Auswertung des resistiven Temperatursensors verwendet werden. Der auswerteseitige Aufwand für die Sensorvorrichtung 10 lässt sich damit erheblich minimieren.

Neben den vorstehend beschriebenen Ausführungsbeispielen existieren im Rahmen der vorliegenden Erfindung selbstverständlich noch weitere Ausgestaltungsmöglichkeiten.

So ist es etwa möglich, die mäanderförmigen Leiterbahnen der Grundelektrode nicht bifilar, sondern nur aus einer einzigen mäanderförmigen Leiterbahn bestehend auszubilden.

Ebenso können natürlich auch alternative Schaltungsanordnungen zur Auswertung des Temperatursensors und/oder des Feuchtesensors zum Einsatz kommen usw..

**Patentansprüche**

1. Sensorvorrichtung und Schaltungsanordnung zur Messung von Feuchte und Temperatur,

   - wobei die Sensorvorrichtung aus einem elektrisch leitfähigen Halbleiter-Trägersubstrat (1; 11) mit einem daraufangeordneten kapazitiven Feuchtesensor (10.1) besteht, der eine Grundelektrode (3; 13), eine feuchtedurchlässige Deckelektrode (5; 15) sowie ein zwischen Grund- und Deckelektrode (3, 13; 5; 15) angeordnetes, feuchteempfindliches Dielektrikum (4; 14) umfasst, und bei dem die Grundelektrode (3; 13) aus einem Material mit einer definierten temperaturabhängigen Widerstandscharakteristik besteht und auf einer Passivierungsschicht (2; 12) aufgebracht ist, die auf dem Halbleiter-Trägersubstrat (1; 11) angeordnet ist, und
   - wobei die Schaltungsanordnung sowohl als Temperaturmessungs-Schaltungsanordnung wie auch als Feuchtemessungs-Schaltungsanordnung fungiert, und

      - die Grundelektrode (3; 13) dabei desweiteren Bestandteil der Temperaturmessungs-Schaltungsanordnung ist, und
      - die Grundelektrode (3; 13) desweiteren Bestandteil einer Referenzkapazität (10.2) der Feuchtemessungs-Schaltungsanordnung ist, die zur Auswertung des Feuchtesensors (10.1) dient, wobei die Referenzkapazität (10.2) die Grundelektrode (3; 13), das Halbleiter-Trägersubstrat (1; 11) sowie die Passivierungsschicht (2; 12) umfasst.

2. Sensorvorrichtung und Schaltungsanordnung nach Anspruch 1, wobei die Passivierungsschicht (2; 12) aus Siliziumdioxid und/oder Siliziumoxynitrid ausgebildet ist.

3. Sensorvorrichtung und Schaltungsanordnung nach mindestens einem der vorhergehenden Ansprüche, wobei die Grundelektrode (3; 13) als mäanderförmig verlaufende, bifilare, metallische Leiterbahn ausgebildet ist.

4. Sensorvorrichtung und Schaltungsanordnung nach Anspruch 3, wobei auf dem Halbleiter-Trägersubstrat (1; 11) ein Kontaktierungsanschluss (10.6) für die Deckelektrode (5; 15), zwei Kontaktierungsanschlüsse (10.4, 10.5) für die Grundelektrode (3; 13) sowie ein Kontaktierungsanschluss (10.7) für das Halbleiter-Trägersubstrat (1; 11) angeordnet sind.

5. Sensorvorrichtung und Schaltungsanordnung nach Anspruch 4, wobei die Kontaktierungsanschlüsse (10.4, 10.5, 10.6, 10.7) jeweils planar ausgebildet sind.

6. Sensorvorrichtung und Schaltungsanordnung nach Anspruch 1, wobei die weiteren Komponenten der Temperaturmessungs-Schaltungsanordnung räumlich entfernt vom Halbleiter-Trägersubstrat (1; 11) angeordnet sind.

7. Sensorvorrichtung und Schaltungsanordnung nach mindestens einem der vorhergehenden Ansprüche, wobei das Halbleiter-Trägersubstrat (1; 11) aus dotiertem Silizium ausgebildet ist.

**Claims**

1. Sensor device and circuit arrangement for measuring moisture and temperature,

   - wherein the sensor device consists of an electrically conductive semiconductor carrier substrate (1; 11) with a capacitive moisture sensor (10.1), which is arranged on said substrate and comprises a bottom electrode (3; 13), a moisture-permeable top electrode (5; 15) and a moisture-sensitive dielectric (4; 14) arranged between bottom and top electrodes (3, 13; 5, 15) and in which the bottom electrode (3; 13) consists of a material having a defined temperature-dependent resistance characteristic and is applied on a passivation layer (2; 12) arranged on the semiconductor carrier substrate (1; 11) and
- wherein the circuit arrangement functions both as a temperature measuring circuit arrangement and as a moisture measuring circuit arrangement, and
- the bottom electrode (3; 13) here is furthermore part of the temperature measuring circuit arrangement, and
- the bottom electrode (3; 13) is furthermore part of a reference capacitance (10.2) of the moisture measuring circuit arrangement, which serves for evaluation of the moisture sensor (10.1), wherein the reference capacitance (10.2) comprises the bottom electrode (3; 13), the semiconductor carrier substrate (1; 11) and the passivation layer (2; 12).

2. Sensor device and circuit arrangement according to Claim 1, wherein the passivation layer (2; 12) is formed from silicon dioxide and/or silicon oxynitride.

3. Sensor device and circuit arrangement according to at least one of the preceding claims, wherein the bottom electrode (3; 13) is embodied as a bifilar, metallic conductor track extending in a meandering fashion.

4. Sensor device and circuit arrangement according to Claim 3, wherein one contacting terminal (10.6) for the top electrode (5; 15), two contacting terminals (10.4, 10.5) for the bottom electrode (3; 13) and one contacting terminal (10.7) for the semiconductor carrier substrate (1; 11) are arranged on the semiconductor carrier substrate (1; 11).

5. Sensor device and circuit arrangement according to Claim 4, wherein the contacting terminals (10.4, 10.5, 10.6, 10.7) are each embodied in a planar fashion.

6. Sensor device and circuit arrangement according to Claim 1, wherein the further components of the temperature measuring circuit arrangement are arranged spatially at a distance from the semiconductor carrier substrate (1; 11).

7. Sensor device and circuit arrangement according to at least one of the preceding claims, wherein the semiconductor carrier substrate (1; 11) is formed from doped silicon.

**Revendications**

1. Dispositif capteur et agencement de circuit pour mesurer l'humidité et la température,

- le dispositif capteur étant composé d'un substrat de support de semi-conducteur électriquement conducteur (1 ; 11) doté d'un capteur d'humidité capacitif (10.1) disposé sur celui-ci qui comprend une électrode de base (3 ; 13), une électrode de recouvrement (5 ; 15) laissant passer l'humidité, ainsi qu'un diélectrique (4 ; 14) sensible à l'humidité et disposé entre l'électrode de base et l'électrode de recouvrement (3, 13 ; 5 ; 15), et dans lequel l'électrode de base (3 ; 13) est composée d'un matériau ayant une caractéristique de résistance dépendante de la température définie et est appliquée sur une couche de passivation (2 ; 12) qui est disposée sur le substrat de support de semi-conducteur (1 ; 11), et
- l'agencement de circuit servant à la fois d'agencement de circuit de mesure de température et d'agencement de circuit de mesure d'humidité, et
- l'électrode base (3 ; 13) faisant en outre partie de l'agencement de circuit de mesure de température, et
- l'électrode de base (3 ; 13) faisant en outre partie d'une capacité de référence (10.2) de l'agencement de circuit de mesure d'humidité qui sert à évaluer le capteur d'humidité (10.1), la capacité de référence (10.2) comprenant l'électrode de base (3 ; 13), le substrat de support de semi-conducteur (1 ; 11) ainsi que la couche de passivation (2 ; 12).

2. Dispositif capteur et agencement de circuit selon la revendication 1, dans lesquels la couche de passivation (2 ; 12) est réalisée en dioxyde de silicium et/ou en oxynitrure de silicium.

3. Dispositif capteur et agencement de circuit selon au moins l'une des revendications précédentes, dans lesquels l'électrode de base (3 ; 13) est réalisée sous forme de piste conductive métallique bifilaire, s'étendant en forme de méandre.

4. Dispositif capteur et agencement de circuit selon la revendication 3, dans lesquels une borne de contact (10.6) pour l'électrode de recouvrement (5 ; 15), deux bornes de contact (10.4, 10.5) pour l'électrode de base (3 ; 13) ainsi qu'une borne de contact (10.7) pour le substrat de support de semi-conducteur (1 ; 11) sont disposées sur le substrat de support de semi-conducteur (1 ; 11).

5. Dispositif capteur et agencement de circuit selon la revendication 4, dans lesquels les bornes de contact (10.4, 10.5, 10.6, 10.7) sont respectivement réalisées de manière plane.

6. Dispositif capteur et agencement de circuit selon la revendication 1, dans lesquels les autres composants de l'agencement de circuit de mesure de température sont disposés de manière physiquement éloignée du substrat de support de semi-conducteur (1 ; 11).

7. Dispositif capteur et agencement de circuit selon au moins l'une des revendications précédentes, dans lesquels le substrat de support de semi-conducteur (1 ; 11) est réalisé en silicium dopé.

Fig. 1a

Fig. 1b

Fig. 2a

Fig. 2b

Fig. 3

EP 3 421 981 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4277742 A
- US 20160161435 A1
- US 20130139587 A1
- EP 1574847 A2
- EP 1574847 B1